# EUROPEAN PATENT APPLICATION

(11) **EP 4 597 524 A1**
(43) Date of publication of application: **06.08.2025**
(21) Application number: 24155516.8
(22) Date of filing: 02.02.2024
(51) Int. Cl.: H01B 7/14, F03D 13/25, H01B 7/20, H01B 7/282, H01B 13/22, H02G 1/14, H02G 15/14

(54) **SUBMARINE POWER CABLE SYSTEM WITH MOISTURE BUFFER ZONE**

(71) Applicant: NKT HV Cables AB, 371 60 Lyckeby (SE)
(72) Inventor: ERIKSSON, Erik, Växjö (SE); FAGRELL, Johan, Malmö (SE); CRONHOLM, Kent, Karlskrona (SE)
(74) Representative: Kransell & Wennborg KB

(57) **Abstract**

A submarine power cable system comprising: a wet design power cable section (1a) comprising a first conductor section, a first insulation system section arranged around the first conductor section, and a screen layer formed by one or more of helically laid elongated metal elements arranged around the first insulation system section, and a static power cable section (1b), which is a moisture buffer zone, comprising a second conductor section connected to the first conductor section and a second insulation system section connected to the first insulation system section by means of a flexible joint (1c), the static power cable section (1b) further comprising a metallic radial water-blocking sheath arranged around the second insulation system section, wherein the metallic radial water-blocking sheath is electrically connected to the screen layer, and wherein, from the flexible joint (1c) to a far end of the static power cable section (1b) the submarine power cable system has an axial length in a range of 1-1000 m, the far end being arranged to be connected to or being connected to a subsea electric component.

## Description

### TECHNICAL FIELD

The present disclosure generally relates to a submarine power cable system.

### BACKGROUND

Dynamic power cables are typically used to energize floating oil and gas platforms or as array or export cables in floating wind applications. One failure mode of dynamic cables is related to fatigue, which can be in the radial water barrier of the core for a dry system. It is therefore desirable to design the dynamic power cable without a radial water barrier, i.e., with a wet insulation system in applications with large fatigue loads. The second end of the dynamic power cable is often jointed to a static power cable which preferably is a dry design, i.e., include a hermetically sealed radial water barrier. The reason for the static cable to be dry is twofold: the first is that the static power cable can be repaired with a traditional rigid sea joint including pre-fabricated core joints, and the second reason is that the consequence of any unforeseen failure modes of a wet insulation system is limited to only the dynamic power cable, which is typically in the order to 1% of the total length of the submarine cable system. The reason for prefabricated joints not being suitable for wet applications is the wet interface between the joint and the cable. This is also addressed in e.g., CIGRE TB 722 which states that the physical interface between the insulation system of the joint and the cable are not suitable to operate in wet conditions.

### SUMMARY

In view of the above an object of the present disclosure is to provide a submarine power cable system which solves or at least mitigates the problems of the prior art.

There is hence provided a submarine power cable system comprising: a wet design power cable section comprising a first conductor section, a first insulation system section arranged around the first conductor section, and a screen layer formed by one or more of helically laid elongated metal elements arranged around the first insulation system section, and a static power cable section, which is a moisture buffer zone, the static power cable section comprising a second conductor section connected to the first conductor section and a second insulation system section connected to the first insulation system section by means of a flexible joint, the static power cable section further comprising a metallic radial water-blocking sheath arranged around the second insulation system section, wherein the metallic radial water-blocking sheath is electrically connected to the screen layer, and wherein, from the flexible joint to a far end of the static power cable section the submarine power cable system has an axial length in a range of 1-1000 m, the far end being arranged to be connected to or being connected to a subsea electric component.

The static power cable section acts as a moisture buffer zone. The wet design power cable section can thus be connected to a subsea electric component such as a dry submarine power cable section or subsea electrical module via the static power cable section, i.e., the moisture buffer zone, in a simple manner.

For example, the submarine power cable system formed by the wet design power cable section and the static power cable section may be a single-length repair cable. A repair cable is a replacement cable length. A repair cable is much shorter than the installed submarine power cable system and is typically stored close to the location of the submarine power cable system it intends to replace a section of in case necessary, for example in the eventuality of local mechanical damage to the original submarine power cable system. In one example, in a non-installed state, in storage, the submarine power cable system according to the present disclosure may consist of the wet design power cable section and the static power cable section.

As an example, an existing and previously installed cable system may comprise a wet design dynamic submarine power cable section joined by means of a flexible joint with a dry export cable. According to the example, the dynamic power cable section has been subjected to a fault or damage requiring repair. The flexible joint may not be sensitive to moisture, but a repair would require the use of a rigid sea joint, which is sensitive to moisture. The repair could involve replacing the entire wet design dynamic submarine power cable section and a portion of the dry export cable with the submarine power cable system according to the present disclosure. The far end of the static power cable section of the single-length repair cable could then be joined with the existing dry export cable by means of the rigid sea joint, with the static power cable section acting as a moisture buffer zone between the wet design dynamic submarine power cable section and the dry export cable.

The static power cable section is a dry static power cable section.

The first insulation system section may for example be based on XLPE, or ethylene propylene rubber (EPR).

The second insulation system section may for example be based on XLPE, or EPR.

The first conductor section may be stranded such as round stranded, compacted, or segmental. The wet design power cable section may in this case comprise a water-blocking compound arranged between the strands of which the first conductor section is formed, filling voids between the strands.

The second conductor section may be stranded such as round stranded, compacted, or segmental. The static power cable section may in this case comprise a water-blocking compound arranged between the strands of which the second conductor section is formed, filling voids between the strands. This prevents or at least restricts longitudinal water ingress along the conductor of the static power cable section.

A flexible joint may be performed in the factory before any armour layer, if present, has been applied to the one or more power cores of the submarine power cable system or in the field when any armour layer is already present. A flexible joint may in the former case also be referred to as a factory joint and in the latter case a flexible field joint or flexible repair joint. For the flexible joint, the first conductor section and the second conductor section are welded together thus forming a conductor joint, and a joint insulation system is rebuilt over the conductor joint. Typically, in the jointing process, the end section of the first insulation system and the end section of the second insulation system are arranged tapering towards the conductor joint, wherein the joint insulation system is rebuilt by applying tape, or by injection moulding, to form an inner semiconducting layer around the conductor joint, an insulation layer around the inner semiconducting layer, and an outer semiconducting layer around the insulation layer. The inner semiconducting layer is connected to the corresponding layer of each of the first insulation system section and the second insulation system section, the insulation layer is connected to the corresponding layer of each of the first insulation system section and the second insulation system section, and the outer semiconducting layer is connected to the corresponding layer of each of the first insulation system section and the second insulation system section. The flexible joint may be a vulcanised flexible joint, in which case the joint insulation system is vulcanised.

In contrast to a flexible joint, a pre-fabricated or pre-moulded joint comprises a pre-fabricated polymeric sleeve which is slid over the conductor joint. This typically makes the joint bulkier than a flexible joint. The conductor joint is in this case often formed using a tubular connector which is clamped or screwed to the two conductor sections that are being joined.

The static power cable section may comprise a water-swellable layer arranged around the second insulation system section and underneath the metallic radial water-blocking sheath.

According to one embodiment the axial length is in the range of 1-500 m, or 1-400 mm, or 1-200 m, or 1-100 m, or 1-50 m, or 1-10 m, or 5-500 m, or 5-400 mm, or 5-200 m, or 5-100 m, or 5-50 m, or 5-10 m.

According to one embodiment the wet design power cable section is a dynamic submarine power cable section.

According to one embodiment the wet design power cable section is a static power cable section.

According to one embodiment the metallic radial water-blocking sheath is an extruded metal sheath or is longitudinally welded. The metallic radial water-blocking sheath may for example be a lead sheath, or comprise copper, a copper alloy, stainless steel, aluminium, or an aluminium alloy.

One embodiment comprises the subsea electric component, wherein the far end of the static power cable section is connected to the subsea electric component.

The static power cable section may be directly connected to the subsea electric component.

According to one embodiment the static power cable section is a first static power cable section, wherein the submarine power cable system comprises a second static power cable section, wherein the subsea electric component is a rigid sea joint, and wherein the first static power cable section is joined with the second static power cable section by means of the rigid sea joint.

According to one embodiment the second static power cable section comprises a third conductor section connected to the second conductor section, and a third insulation system section arranged around the third conductor section, the second static power cable section further comprising a water-swellable layer arranged around the third insulation system section, and a metallic radial water-blocking sheath arranged around the water-swellable layer.

The third conductor section may be stranded such as round stranded, compacted, or segmental. The second static power cable section may in this case comprise a water-blocking compound arranged between the strands of which the second conductor section is formed. This prevents or at least restricts longitudinal water ingress along the conductor of the second static power cable section.

According to one embodiment the second static power cable section is longer than the first static power cable section.

According to one embodiment the second static power cable section is an order of one, an order of two, an order of three, or an order of four, longer than the first static power cable section.

According to one embodiment the subsea electric component is a subsea transformer module, a subsea reactor module, a subsea motor module, a subsea pump module, subsea switchgear module, or a subsea frequency converter module.

According to one example, the subsea electric component may comprise a subsea connector, which connects the static power cable section with the subsea transformer module, subsea reactor module, subsea motor module, subsea pump module, subsea switchgear module, or subsea frequency converter module. The subsea connector may be a wet mate or a dry mate subsea connector.

According to one embodiment the subsea electric component is a subsea T-joint, wherein the submarine power cable system comprises two additional static power cable sections, each connected to the subsea T-joint.

According to one embodiment each of the two additional static power cable sections comprises a respective insulation system section, and a respective metallic radial water-blocking sheath arranged around the insulation system section.

According to one embodiment the wet design power cable section is free of any helically laid elongated metal element(s) radially outside the first conductor section and the second conductor section other than that/those forming the screen layer, and free of a metallic radial water-blocking sheath.

According to one embodiment the submarine power cable system is a multi-phase AC power cable system.

Generally, all terms used in the claims are to be interpreted according to their ordinary meaning in the technical field, unless explicitly defined otherwise herein. All references to "a/an/the element, apparatus, component, means", etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a submarine power cable system comprising a wet design power cable section and a static power cable section;
Fig. 2 schematically shows a cross-section of an example of a wet design power cable section;
Fig. 3 schematically shows a cross-section of an example of a static power cable section;
Fig. 4 schematically shows an example of a submarine power cable system comprising a subsea electric component in the form of a rigid sea joint;
Fig. 5 schematically shows an example of a submarine power cable system comprising a subsea electric component in the form of a subsea electrical module; and
Figs 6-7 schematically show an example of a submarine power cable system comprising a subsea electric component in the form of a T-joint.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

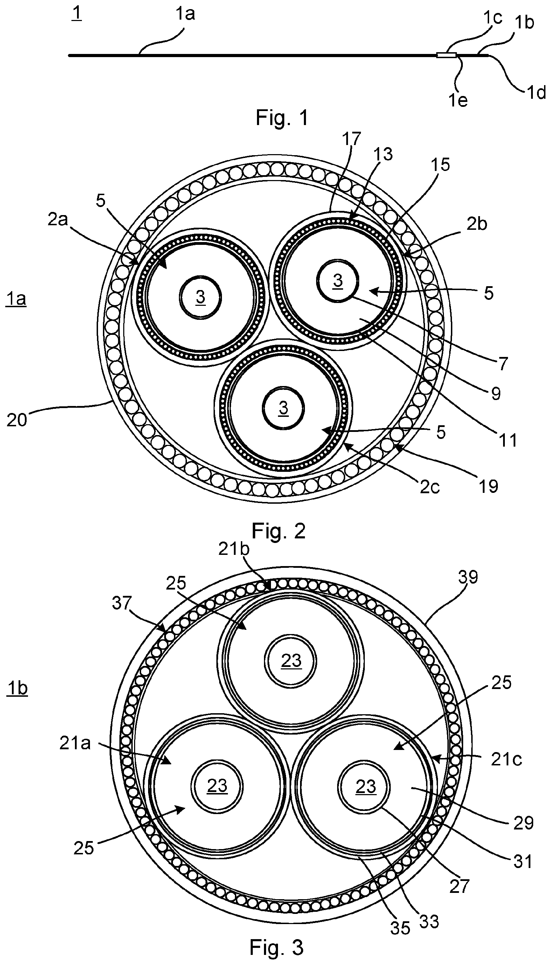

Fig. 1 schematically shows a side view of an example of a submarine power cable system 1.

The submarine power cable system 1 comprises a wet design power cable section 1a and a static power cable section 1b. The submarine power cable system 1 also comprises a flexible joint 1c, which directly connects the wet design power cable section 1a with the static power cable section 1b.

The wet design power cable section 1a may be a wet design dynamic power cable section or a wet design static power cable section.

Turning now to Fig. 2, a cross-section of the wet design power cable section 1a is shown. The cross-section may be at any point along the length of the wet design power cable section 1a.

According to the example, the wet design power cable section 1a is a multi-core submarine power cable section. For example, the wet design power cable section 1a may be a multi-phase AC submarine power cable section, such as a three-phase AC submarine power cable section.

The wet design power cable section 1a may according to one example comprise three stranded cores 2a, 2b, 2c. The cores 2a-2c are stranded. Alternatively, the wet design power cable section may comprise a single core.

Each core 2a-2c comprises a respective first conductor section 3, which extends along the length of the wet design power cable section 1a.

Each core 2a-2c comprises a respective first insulation system section 5. The first insulation system section 5 is arranged around the first conductor section 3. The first insulation system section 5 comprises an inner semiconducting layer 7 arranged around the first conductor section 3, an insulation layer 9 arranged around the inner semiconducting layer 7, and an outer semiconducting layer 11 arranged around the insulation layer 9. The first insulation system section 5 may be polymer-based. The first insulation system section 5 may be extruded. The first insulation system section 5 may for example be XLPE or EPR-based. Thus, each layer 7, 9, 11 may for example comprise XLPE or EPR as base polymer.

Each core 2a-2c comprises a screen layer 13 formed by one or more helically laid elongated metal elements 15 arranged around the first insulation system section 5. The one or more elongated metal elements 15 may for example be a plurality of wires or a tape. The elongated metal element(s) may comprise copper or aluminium, for example. The screen layer 13 is designed to carry the charging current or fault currents in case of an electric fault.

According to one example, each core 2a-2c may comprise a bedding layer arranged between the first insulation system section 5 and the screen layer 13. The bedding layer may be semiconducting.

Further, each core 2a-2c may comprise a polymer layer 17 arranged around the screen layer 13.

Alternatively, or additionally to the bedding layer mentioned above, each core may comprise an outer bedding layer arranged between the screen layer and the polymer layer 17.

The cores 2a-2c do not comprise any lead sheath, longitudinally welded metal sheath, or any helically laid elongated metal elements other than that/those which in one example form the screen layer and, if the first conductor section and/or the second conductor section is/are stranded, those of the stranded conductor section(s). Water that has penetrated into a core 2a-2c through the polymer layer 17 may thus diffuse into the corresponding first insulation system section 5.

The wet design power cable section 1a may comprise one or more armour layers 19 arranged around the cores 2a-2c. Further, the wet design power cable section 1a may comprise an outer sheath or outer serving 20 arranged around the armour layer(s) 19, or if no armour layer(s) is/are present, around the stranded cores 2a-2c.

Fig. 3 shows a cross-sectional view of the static power cable section 1b, along any point thereof.

According to the example, the static power cable section 1b is a multi-core submarine power cable section. For example, the static power cable section 1b may be a multi-phase AC submarine power cable section, such as a three-phase AC submarine power cable section.

The static power cable section 1a may comprise three stranded cores 21a, 21b, 21c. Alternatively, the static power cable section may comprise a single core if the wet design power cable section has a single core.

Each core 21a-21c comprises a respective second conductor section 23, which extends along the length of the static power cable section 1b.

Each core 21a-21c comprises a respective second insulation system section 25. The second insulation system section 25 is arranged around the second conductor section 23. The second insulation system section 25 comprises an inner semiconducting layer 27 arranged around the second conductor section 23, an insulation layer 29 arranged around the inner semiconducting layer 27, and an outer semiconducting layer 31 arranged around the insulation layer 29. The second insulation system section 25 may be polymer-based. The second insulation system section 25 may be extruded. The second insulation system section 25 may for example be XLPE, EPR, polypropylene, or ethylene propylene diene monomer based, or any other suitable polymer. Thus, each layer 27, 29, 31 may for example comprise XLPE, EPR, polypropylene, or ethylene propylene diene monomer as base polymer.

Each core 21a-21c comprises a water-swellable layer arranged around the second insulation system section 25. The water-swellable layer may for example be formed of tape wound around the second insulation system section 25, or it may be an extruded layer. The water-swellable layer may be semiconducting. The water-swellable layer has the function of preventing or reducing longitudinal water ingress along the static power cable section 1b.

Each core 21a-21c further comprises a metallic radial water-blocking sheath 33 arranged around the water-swellable layer. The metallic radial water-blocking sheath 33 may for example be an extruded metal sheath, such as a lead sheath, or it may be longitudinally welded. If the metallic radial water-blocking sheath 33 is longitudinally welded, it may for example comprise copper, a copper alloy, stainless steel, aluminium, or an aluminium alloy.

The metallic radial water-blocking sheath 33 is electrically connected to the screen layer 13. The electrical connection may be direct or it may be via a common grounding point.

Each core 21a-21c may comprise a polymer layer 35 arranged around the metallic radial water-blocking sheath 33.

The cores 21a-21c are stranded. The static power cable section 1b may comprise an armour layer 37 arranged around the cores 21a-21c. Further, the static power cable section 1b may comprise an outer sheath or outer serving 39 arranged around the armour layer 37.

The first conductor section 3 of each core 2a-2c is joined with a respective one of the second conductor section 23 of the cores 21a-21c. The conductor joint(s) thus formed may be made by welding.

The purpose of the static power cable section 1b is to act as a moisture buffer zone between the wet design power cable 1a and a subsea electric component, which may be dry, connected directly to the far end 1d of the static power cable section 1b, i.e., to protect the subsea electric component from longitudinal water ingress that enters the submarine power cable system 1 radially through the wet design power cable section 1a.

The axial length of the static power cable system 1, from the flexible joint 1c to the far end 1d of the static power cable section 1b is in a range of 1-1000 m, to protect the subsea electric component from moisture, e.g., to keep the moisture level inside the subsea electric component due to longitudinal water ingress into the static power cable section 1b from the wet design power cable section 1a below a predetermined value such as below 70% relative humidity, in an electrically insulating layer in the subsea electric component, during an entire predefined expected operational lifetime of the static power cable section. The predefined expected operational lifetime maybe 30 or 40 years.

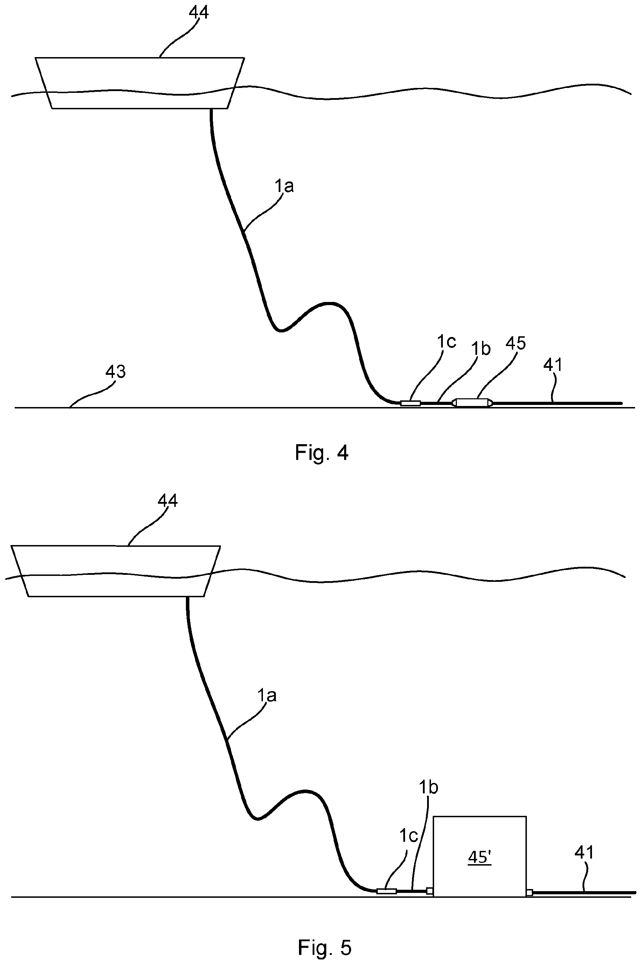

Variations in which the submarine power cable system 1 is included will now be described with reference Figs 4-7.

In the example in Fig. 4, the wet design power cable section 1a is a dynamic submarine power cable suspended to the seabed 43 from a floating structure 44.

In the example in Fig. 4, the submarine power cable system 1 comprises a second static power cable section 41 and a subsea electric component 45 in the form of a rigid sea joint, which connects the static power cable section 1b with the second static power cable section 41 on the seabed 43. The second static power cable section 41 is a dry static power cable section.

The second static power cable section 41 is longer than the first static power cable section 1b. The second static power cable section 41 is an order of one, an order of two, an order of three, or an order of four, longer than the first static power cable section 1b.

The rigid sea joint has an outer casing which is not watertight. The rigid sea joint comprises three watertight inner casings, each configured to accommodate an electrical joint between a respective pair of cores of the static power cable section 1b and the second static power cable section 41. The static power cable section 1b and the second static submarine power cable section 41 must be dry due to the electrical joints, each of which may comprise a pre-moulded or prefabricated joint sleeve as joint insulation system over the respective conductor joint. The second static power cable section further comprises a respective water-swellable layer arranged around the insulation system section of each of its cores.

The wet design power cable section 1a and the static power cable section 1b can be used as a repair cable for connection with the second static submarine power cable 41 located on the seabed 43. A wet design power cable section 1a can thus be readily joined with the second static power cable section 41 by means of the rigid sea joint, due to the moisture buffer zone provided by the static power cable section 1b.

In the example in Fig. 5 the wet design power cable section 1a is a dynamic submarine power cable suspended to the seabed 43 from the floating structure 44.

In the example in Fig. 5, the submarine power cable system 1 comprises the second static power cable section 41 and a subsea electric component 45', which connects the static power cable section 1b with the second static power cable section 41 on the seabed 43. The second static power cable section 41 is a dry static power cable section. The subsea electric component 45' is in this example a subsea electrical module such as a subsea transformer, a subsea reactor, a subsea motor, a subsea pump, subsea switchgear, or a subsea frequency converter. The electrical connection between the static power cable section 1b and the second static power cable section 41 may be required to be dry, and the interior of the subsea electric component 45', which may be filled with a dielectric liquid, may need to have a dry connection interface, e.g., a dry mate subsea connector, for connecting the wet design cable section 1a with the dry static power cable section 1b.

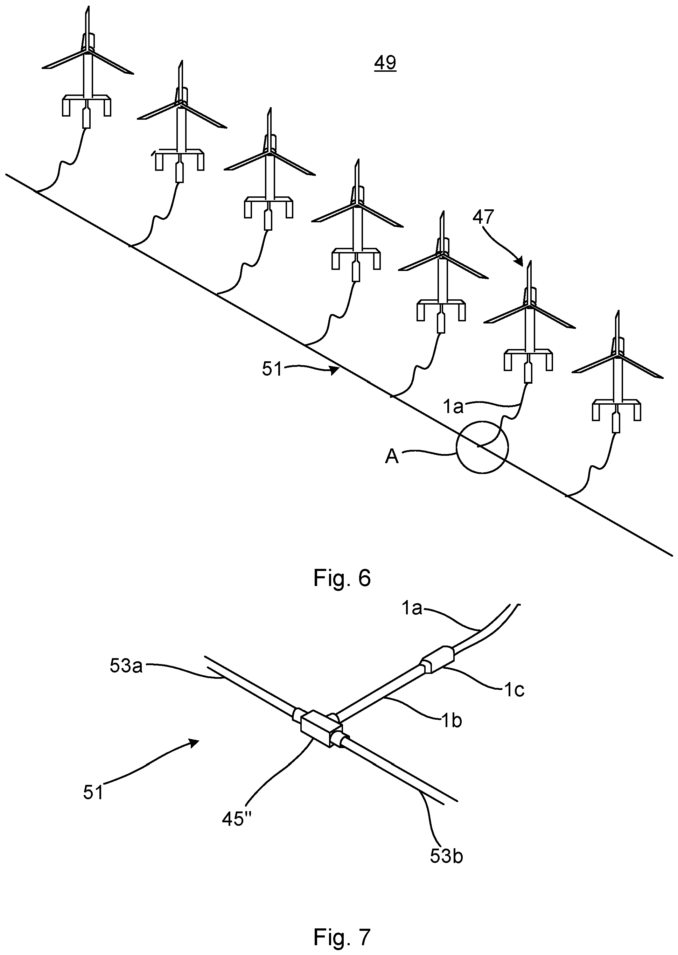

In the example in Figs 6-7, the wet design power cable section 1a is a dynamic submarine power cable suspended to the seabed 43 from a floating wind turbine 47 of a floating wind farm 49. The floating wind farm 49 may comprise many floating wind turbines 47, each being connected to a static submarine cable 51 on the seabed via a respective wet design power cable section 1a in the form of a dynamic submarine power cable and the static power cable section 1b. This is shown in more detail in Fig. 7, which is a close-up of the circle A in Fig. 6.

According to the example, the submarine power cable system 1 comprises two additional static power cable sections 53a and 53b, forming part of the static submarine cable 51, connected to each other and to the static power cable section 1b by a subsea electric component 45" which in this example is a subsea T-joint, or multi-cable joint. The additional static power cable sections 53a and 53b are dry static power cable sections. Thus, each core comprises a respective metallic radial water-blocking sheath which may be extruded or longitudinally welded, to prevent radial water penetration into the insulation system section of the additional static power cable sections 53a and 53b.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. Submarine power cable system (1) comprising:
a wet design power cable section (1a) comprising a first conductor section (3), a first insulation system section (5) arranged around the first conductor section (3), and a screen layer (13) formed by one or more of helically laid elongated metal elements arranged around the first insulation system section (5), and
a static power cable section (1b), which is a moisture buffer zone, comprising a second conductor section (23) connected to the first conductor section (3) and a second insulation system section (25) connected to the first insulation system section (5) by means of a flexible joint (1c), the static power cable section (1b) further comprising a metallic radial water-blocking sheath (33) arranged around the second insulation system section (25), wherein the metallic radial water-blocking sheath (33) is electrically connected to the screen layer (13), and
wherein, from the flexible joint (1c) to a far end (1d) of the static power cable section (1b) the submarine power cable system (1) has an axial length in a range of 1-1000 m, the far end (1d) being arranged to be connected to or being connected to a subsea electric component (45; 45'; 45").

2. Submarine power cable system (1) as claimed in claim 1, wherein the axial length is in the range of 1-500 m, or 1-400 mm, or 1-200 m, or 1-100 m, or 1-50 m, or 1-10 m, or 5-500 m, or 5-400 mm, or 5-200 m, or 5-100 m, or 5-50 m, or 5-10 m.

3. Submarine power cable system (1) as claimed in claim 1 or 2, wherein the wet design power cable section (1a) is a dynamic submarine power cable section.

4. Submarine power cable system (1) as claimed claim 1 or 2, wherein the wet design power cable section (1a) is a static power cable section.

5. Submarine power cable system (1) as claimed in any of the preceding claims, wherein the metallic radial water-blocking sheath (33) is an extruded metal sheath or is longitudinally welded.

6. Submarine power cable system (1) as claimed in any of the preceding claims, comprising the subsea electric component (45; 45'; 45"), wherein the far end (1d) of the static power cable section (1b) is connected to the subsea electric component (45; 45'; 45").

7. Submarine power cable system (1) as claimed in claim 6, wherein the static power cable section (1b) is a first static power cable section, wherein the submarine power cable system (1) comprises a second static power cable section (41), wherein the subsea electric component (45) is a rigid sea joint, and wherein the first static power cable section (1b) is joined with the second static power cable section (41) by means of the rigid sea joint.

8. Submarine power cable system (1) as claimed in claim 7, wherein the second static power cable section (41) comprises a third conductor section connected to the second conductor section (23), and a third insulation system section arranged around the third conductor section, the second static power cable section (41) further comprising a water-swellable layer arranged around the third insulation system section, and a metallic radial water-blocking sheath arranged around the water-swellable layer.

9. Submarine power cable system (1) as claimed in claim 8, wherein the second static power cable section (41) is longer than the first static power cable section (1b).

10. Submarine power cable system (1) as claimed in claim 9, wherein the second static power cable section (41) is an order of one, an order of two, an order of three, or an order of four, longer than the first static power cable section (1b).

11. Submarine power cable system (1) as claimed in claim 6, wherein the subsea electric component (45') is a subsea transformer module, a subsea reactor module, a subsea motor module, a subsea pump module, subsea switchgear module, or a subsea frequency converter module.

12. Submarine power cable system (1) as claimed in claim 6, wherein the subsea electric component (45") is a subsea T-joint, wherein the submarine power cable system (1) comprises two additional static power cable sections (53a, 53b), each connected to the subsea T-joint.

13. Submarine power cable system (1) as claimed in claim 12, wherein each of the two additional static power cable sections (53a, 53b) comprises a respective insulation system section, and a respective metallic radial water-blocking sheath arranged around the insulation system section.

14. Submarine power cable system as claimed in any of the preceding claims, wherein the wet design power cable section (1a) is free of any helically laid elongated metal element(s) radially outside the first conductor section (3) and the second conductor section (23) other than that/those forming the screen layer, and free of a metallic radial water-blocking sheath.

15. Submarine power cable system (1) as claimed in any of the preceding claims, wherein the submarine power cable system (1a) is a multi-phase AC power cable system.
